# EUROPÄISCHE PATENTSCHRIFT

(11) **EP 2 360 388 B1**
(45) Veröffentlichungstag und Bekanntmachung des Hinweises auf die Patenterteilung: **27.01.2016**
(21) Anmeldenummer: 10001410.9
(22) Anmeldetag: 11.02.2010
(51) Int. Cl.: F16F 1/373, F16F 1/376

(54) **Schichtfeder mit einer mäanderförmigen Elastomerschicht**
Layer spring with a meandering elastomeric layer
Ressort multicouche doté d'une couche élastomère sinueuse

(43) Veröffentlichungstag der Anmeldung: 24.08.2011
(73) Patentinhaber: Carl Freudenberg KG, 69469 Weinheim (DE)
(72) Erfinder: Ebert, Michael, 13055 Berlin (DE); Erl, Andreas, 16761 Hennigsdorf (DE); Hinze, Andreas, 14621 Schönwalde-Glien (DE)

(56) Entgegenhaltungen:
- WO-A1-2008/054036
- DE-A1- 2 742 616
- DE-C- 738 340
- DE-U- 1 700 473
- US-A1- 2004 168 464
- US-A1- 2009 184 229

## Beschreibung

### Technisches Gebiet

Die Erfindung betrifft eine Schichtfeder zur festen Anbindung an eine Masse, umfassend eine Grundplatte und eine Deckplatte, wobei zwischen der Grundplatte und der Deckplatte eine Elastomerschicht angeordnet ist und wobei die Grundplatte, die Deckplatte und die Elastomerschicht von Durchführungselementen durchgriffen sind, wobei die Elastomerschicht eine nach außen orientierte freie Oberfläche aufweist und in dem von der freien Oberfläche, der Grundplatte und der Deckplatte begrenzten Bereich unterschiedliche Dicken aufweist.

### Stand der Technik

Eine derartige Schichtfeder ist aus der US 2004/0168464 A1 bekannt.

Der Stand der Technik umfasst Schichtfedern, welche Durchführungselemente aufweisen, durch die Medien geführt werden können. Diese Durchführungselemente weisen einander zugewandte topfartige Durchzüge auf, die durch Tiefziehen erzeugbar sind. Sie erlauben nur eine geringe Schubdeformationslänge in Abbaurichtung einer statischen Druckdifferenz.

Diese statische Druckdifferenz kann zwischen einer inneren Wandung der Durchführungselemente und einer äußeren freien Oberfläche der Elastomerschicht auftreten, wobei die Elastomerschicht mit der umgebenden Atmosphäre in Wirkverbindung steht. In den Durchführungselementen können sich häufig nur relativ niedrige Drücke aufbauen.

Des Weiteren sind bei den bekannten Schichtfedern keine Vorkehrungen für zuverlässige Abreissicherungen vorgesehen und können daher nicht mit Abreissicherungen versehen werden, die zum Lieferumfang der Schichtfeder gehören.

Schließlich sind die bisher bekannten Gestaltungen von Grundplatten und Deckplatten nicht bauraumoptimiert, da diese in der Draufsicht rechteckig mit abgerundeten Ecken ausgestaltet sind. Eine Anpassung an spezifische Montagesituationen ist daher mit den bekannten Schichtfedern nicht möglich.

### Darstellung der Erfindung

Der Erfindung liegt daher die Aufgabe zugrunde, eine Schichtfeder derart auszugestalten und weiterzubilden, dass diese Medien, die unter hohem Druck stehen, bei hoher Betriebstauglichkeit zuverlässig führen kann.

Die vorliegende Erfindung löst die zuvor genannte Aufgabe durch die Merkmale des Patentanspruchs 1.

Danach ist die eingangs genannte Schichtfeder dadurch gekennzeichnet, dass die Durchführungselemente Hohlzylinder umfassen, welche mit der Grundplatte und/oder der Deckplatte verbunden sind und dass von der Grundplatte ein erster Hohlzylinder abragt und von der Deckplatte ein zweiter Hohlzylinder abragt, wobei die Hohlzylinder konzentrisch angeordnet sind, unterschiedliche Durchmesser aufweisen und die Elastomerschicht teilweise zwischen sich aufnehmen.

Die Hohlzylinder sind vorzugsweise metallisch und können mit der Grundplatte und/ oder der Deckplatte verschweisst werden. Sie bilden gemeinsam einen Durchführung für Medien und/ oder Leitungen. Die Elastomerschicht kann durch die Anordnung der Hohlzylinder zwischen den Hohlzylindern in ihrer Dicke verringert werden.

Erfindungsgemäß kann eine solche Schichtfeder Massen miteinander verbinden, deren Masseverhältnis 1:10 betragen kann. Dabei ist konkret erkannt worden, dass die erfindungsgemäß ausgestaltete Elastomerschicht aufgrund ihrer variierenden Dicke mäanderförmig ausgestaltet ist. Sie ist erfindungsgemäß ein integraler Bestandteil der Schichtfeder und als Dichtung ausgebildet. Hierdurch wird eine Mediendurchleitung durch die Durchführungselemente unter hohem Druck möglich. Weiter ist erkannt worden, dass in den medienführenden Durchführungselementen Leitungen für Medien, aber auch für elektrische Ströme, elektromagnetische Felder oder auch Licht positioniert sein können, so dass ein bidirektionales Durchleiten von Medien, aber auch von elektrischen Strömen, elektromagnetischen Feldern oder auch Licht möglich ist. Weiter ist erkannt worden, dass entweder die Grundplatte oder die Deckplatte gleichzeitig Bestandteil eines durch die Schichtfeder zu lagernden Objektes sein kann. Schließlich ist erkannt worden, dass die mäanderförmige Ausbildung der Elastomerschicht die Ausbildung von Abreissicherungen ermöglicht, die in der Schichtfeder integral vorhanden sind. Insoweit ist eine Schichtfeder angegeben, die Medien unter hohem Druck bei hoher Betriebstauglichkeit zuverlässig führen kann.

Folglich ist die eingangs genannte Aufgabe gelöst.

Die Elastomerschicht könnte von Konturzüge begrenzt Werden, wobei die Konturzüge Grenzflächen zur Elastomerschicht ausbilden und wobei diese Grenzflächen durch zumindest zwei unterschiedliche Dicken der Elastomerschicht voneinander beabstandet sind. Hierdurch erstreckt sich die Elastomerschicht in lateraler Richtung zwischen der Grundplatte und der Deckplatte in Mäanderform mit unterschiedlichen Dicken. Die Elastomerschicht kann daher besonders gut Drücke aufnehmen. Die Elastomerschicht besteht vorzugsweise aus Synthesekautschuk, insbesondere aus AEM, ACM (Acrylatkautschuke) oder ECO (Epichlorhydrinkautschuk).

Die Durchführungselemente könnten strukturierte elastomere Hohlzylindervolumina zur Durchführung von Medien und/ oder Leitungen aufweisen, welche mit einer Schicht aus einem elastomeren Werkstoff ausgekleidet sind. Die Schicht schützt die Schichtfeder vor aggressiven Medien.

Die Durchführungselemente könnten strukturierte Hohlzylindervolumina zur Aufnahme von Abreissicherungen aufweisen, welche mit einer Schicht aus einem elastomeren Werkstoff ausgekleidet sind. Hierdurch wird sichergestellt, dass die Schichtfeder nicht von einer Masse weggerissen wird, mit der sie fest verbunden ist.

Die Durchführungselemente könnten abgestufte Durchgangsbohrungen mit unterschiedlichen Durchmessern aufweisen. Hierdurch können Senkbohrungen erzeugt werden, wobei die Senken mit Elastomer ausgekleidet werden können, um ebene Dichtflächen auszubilden.

Die Durchführungselemente könnten längs ihrer axialen Erstreckung einen über die gesamte Erstreckungslänge gleichen Querschnitt oder verschiedene Querschnitte aufweisen. Diese Querschnitte könnten als Kreisflächen ausgestaltet sein. Diese Querschnitte könnten auch als von Kreisflächen abweichende geometrische Flächen, insbesondere als Rechteckflächen, als Dreieckflächen oder als ovale Flächen, ausgestaltet sein.

In der Grundplatte und/ oder der Deckplatte könnten Durchgangsbohrungen vorgesehen sein, in denen ein Anschlagelement aufgenommen ist. Hierdurch kann ein gewünschter Abstand zwischen der Grundplatte und der Deckplatte eingehalten werden.

Das Anschlagelement könnte als Schraube ausgebildet sein, welche zumindest teilweise mit einer Elastomerbeschichtung versehen ist. Die Elastomerbeschichtung kann an der Grundplatte oder der Deckplatte dämpfend zur Anlage kommen.

In der Grundplatte und/ oder der Deckplatte könnten Befestigungsdurchgangsbohrungen vorgesehen sein, welche der Anbindung der Grundplatte und/ oder der Deckplatte an eine zu lagernde Masse dienen. Hierdurch ist eine feste Verbindung der Schichtfeder mit der Masse möglich.

In der Grundplatte und/ oder der Deckplatte könnten stabförmige Schrauben aufgenommen sein. Diese können der Anbindung der Schichtfeder an Ventile oder andere Bauteile dienen.

In der Grundplatte und/ oder der Deckplatte könnte mindestens eine Einspritzbohrung zum Einspritzen der Elastomerschicht vorgesehen sein. Die Schichtfeder kann daher in einem Formwerkzeug hergestellt werden, wobei das Elastomer durch die Grundplatte und/ oder Deckplatte eingespritzt werden kann.

Die Durchführungselemente könnten mit einem Elastomer ausgekleidet sein, welches sich von dem Elastomer der Elastomerschicht unterscheidet. Durch diese Maßnahme kann die Elastomerschicht selbst vor Einwirkungen aggressiver Medien geschützt werden, welche durch die Durchführungselemente geleitet werden. Zur Herstellung einer solchen Schichtfeder bietet sich eine sogenannte 2K-Technologie an.

Die Durchführungselemente könnten mit einem Material beschichtet sein, welches nicht als Elastomer ausgestaltet ist. Hierdurch kann der Strömungswiderstand für durchströmende Medien reduziert werden.

Die Durchführungselemente könnten mit einem Material beschichtet sein, welches eine antibakterielle Wirkung entfaltet. Hierdurch kann die Schichtfeder in der Medizin eingesetzt werden. Dieses Material ist vorzugsweise nicht als Elastomer ausgestaltet.

Die Durchführungselemente können auch zur Durchführung von Wellenleitern für elektromagnetische Wellen ausgestaltet sein. Vor diesem Hintergrund ist denkbar, dass die Durchführungselemente im Querschnitt rechteckig ausgestaltet sind.

Die Schichtfeder weist vorzugsweise zueinander beabstandete Durchführungselemente auf, deren jeweilige formbestimmenden Bezugsachsen in einer Raumrichtung parallel zueinander orientiert sind. Die Durchführungselemente bilden vorzugsweise ein Muster. Das Muster kann je nach Funktion der Schichtfeder ausgestaltet sein.

Die Schichtfeder besteht vorzugsweise aus strukturierten Durchführungselementen aus elastomerem Werkstoff, welche miteinander materialeinheitlich ohne Trennstelle verbunden sind.

Dabei ist denkbar, dass die Durchführungselemente zumindest teilweise materialeinheitlich ohne Trennstelle mittels des gleichen elastomeren Werkstoffs in Wirkverbindung stehend verbunden sind.

Die Schichtfeder besteht vorzugsweise im Wesentlichen aus den Komponenten Grundplatte, Elastomerschicht und Deckplatte. Die Grundplatte, die Deckplatte und die Elastomerschicht sind durch einen Vulkanisationsprozess dauerhaft miteinander verbunden.

Die Deckplatte und die Grundplatte sind vorzugsweise zueinander parallel angeordnet. Sie können jeweils unterschiedliche Berandungsgeometrien aufweisen. Die Elastomerschicht kann dabei mit ihrer im Mittelschnitt erkennbaren Berandungskurve eine Fläche bilden, welche nicht über die Berandungskurven der Grundplatte und Deckplatte hinausragt. Vielmehr ist die Berandungskurve der Elastomerschicht zu diesen beabstandet ausgebildet.

Die Durchführungselemente sind materialeinheitlich und ohne Trennstelle ausgebildet und stehen mit der Grundplatte und/ oder der Deckplatte in einer Wirkverbindung.

Die hier beschriebene Schichtfeder dient zur Verbindung zweier Objekte oder Massen, welche schwingungstechnisch miteinander verbunden werden sollen. Dabei kann die Grundplatte oder die Deckplatte der Schichtfeder Bestandteil der Schichtfeder und des zu lagernden Objektes bzw. der Masse sein. Durch ihre spezifische Gestaltung ist die Schichtfeder geeignet, Medien durchzuleiten. Zugleich können Informationen durchgeleitet werden.

Die Schichtfeder kann zur Lagerung von Bauteilen und Baugruppen in den Bereichen des allgemeinen Maschinenbaus, der Antriebstechnik, der Fluidik, der Pneumatik, der Pumpen, der Werkzeugmaschinen, der Rationalisierungstechnik, der Robotik, des Fahrzeugbaus und der Energietechnik verwendet werden.

Konkret ist die Schichtfeder für die Durchleitung von zu schaltenden oder zu regelnden Volumenströmen flüssiger und gasförmiger Medien geeignet, wobei auch Feststoffanteile durchgeleitet werden können.

Die Gewichtslast wird typischerweise senkrecht zu den parallelen Platten, nämlich zur Grundplatte und zur Deckplatte aufgenommen. Andere Einleitungen der Gewichtslast eines zu lagernden Objektes relativ zu einem anderen sind ebenfalls denkbar.

Die Schichtfeder dient der relativen Zuordnung und gleichzeitigen Beabstandung zweier Massen. Sie dient dem Tragen einer der beiden Massen gegenüber der anderen Masse im Schwerefeld der Erde.

Sie dient dem Dämpfen einer dynamischen Relativbewegung der beiden Massen zueinander mit der Folge der Abnahme der jeweiligen Speicherinhalte der beiden Massen an kinetischer Energie.

Sie dient dem Isolieren der Wirkungen der einen Masse gegenüber der anderen und umgekehrt bei Auftreten von Änderungen der jeweiligen Speicherinhalte an mechanischer und oder thermischer Energie.

Die zuvor genannten Medien, die durch die Durchführungselemente geleitet werden, dienen der Übertragung von mechanischer Energie.
Auf diese Weise kann beispielsweise ein Ventilkörper bewegt werden. Des Weiteren kann ein Zahnrad oder ein Kupplungselement verschoben werden. Somit lassen sich Energieflüsse steuern oder auch regeln.

Die Durchführungselemente ermöglichen die Durchleitung eines Volumenstroms. Hiermit ist es möglich, neben der Schwingungsentkopplung zwischen Deckplatte und Grundplatte auch einen Volumenaustausch zwischen miteinander in Verbindung stehenden Speicherinhalten von Medien, beispielsweise Flüssigkeiten oder Gasen, zu ermöglichen.

Mittels Leitungen, welche durch die Durchführungselemente geführt werden, kann Information bzw. Energie übertragen werden, welche mittelbar bzw. unmittelbar für eine Steuerung und Regelung genutzt werden kann. Die Leitungen können auch der Zustandserfassung von realen Objekten dienen.

Es gibt nun verschiedene Möglichkeiten, die Lehre der vorliegenden Erfindung in vorteilhafter Weise auszugestalten und weiter zu bilden. Dazu ist einerseits auf die nachgeordneten Ansprüche, andererseits auf die nachfolgende Erläuterung eines bevorzugten Ausführungsbeispiels der erfindungsgemäßen Schichtfeder anhand der Zeichnung zu verweisen.

In Verbindung mit der Erläuterung des bevorzugten Ausführungsbeispiels anhand der Zeichnung, werden auch im Allgemeinen bevorzugte Ausgestaltungen und Weiterbildungen der Lehre erläutert.

### Kurzbeschreibung der Zeichnung

In der Zeichnung zeigen
- Fig. 1a: eine Draufsicht auf eine Schichtfeder,
- Fig. 1b: eine Schnittansicht der Schichtfeder, wobei die Grundplatte, die Deckplatte und die sandwichartig zwischen diesen aufgenommene Elastomerschicht gezeigt ist,
- Fig. 1c: eine perspektivische Ansicht der Schichtfeder,
- Fig. 2a: eine Schnittansicht der Schichtfeder, wobei die Grundplatte, die Deckplatte und die sandwichartig zwischen diesen aufgenommene mäanderförmige Elastomerschicht gezeigt ist,
- Fig. 2b: eine Schnittansicht einer Schichtfeder, wobei die Grundplatte, die Deckplatte und die sandwichartig zwischen diesen aufgenommene mäanderförmige Elastomerschicht gezeigt ist, wobei die Durchführungselemente mit unterschiedlichen Durchmessern ausgestaltet sind,
- Fig. 2c: eine Detailansicht eines Durchführungselements mit unterschiedlichen Durchmessern,
- Fig. 3: eine Durchgangsbohrung, die als Abreissicherung fungiert,
- Fig. 4: eine weitere Durchgangsbohrung, die als Abreissicherung fungiert,
- Fig. 5: Durchgangsbohrungen durch die Grundplatte und die Deckplatte, welche im Wesentlichen der Aufnahme eines Anschlagelements dienen,
- Fig. 6a: die Durchgangsbohrung gemäß Fig. 5, wobei in dieser eine Schraube aufgenommen ist,
- Fig. 6b: eine weitere Durchgangsbohrung, in der eine Schraube aufgenommen ist,
- Fig. 7a: Befestigungsdurchgangsbohrungen durch die Grundplatte und/ oder Deckplatte, welche im Wesentlichen der Befestigung einer schwingungstechnisch zu lagernden Masse dient bzw. der Befestigung an eine Masse dient,
- Fig. 7b: eine Detailansicht einer Befestigungsdurchgangsbohrung gemäß Fig. 7a,
- Fig. 8a: eine Durchgangsbohrung durch die Deckplatte, in welcher eine stabförmige Schraube aufgenommen ist,
- Fig. 8b: eine Detailansicht der stabförmigen Schraube gemäß Fig. 8a und
- Fig. 9: einen Anspritznippel, der sich in eine Einspritzbohrung der Grundplatte erstreckt, durch welche Elastomer zugeführt werden kann.

### Ausführung der Erfindung

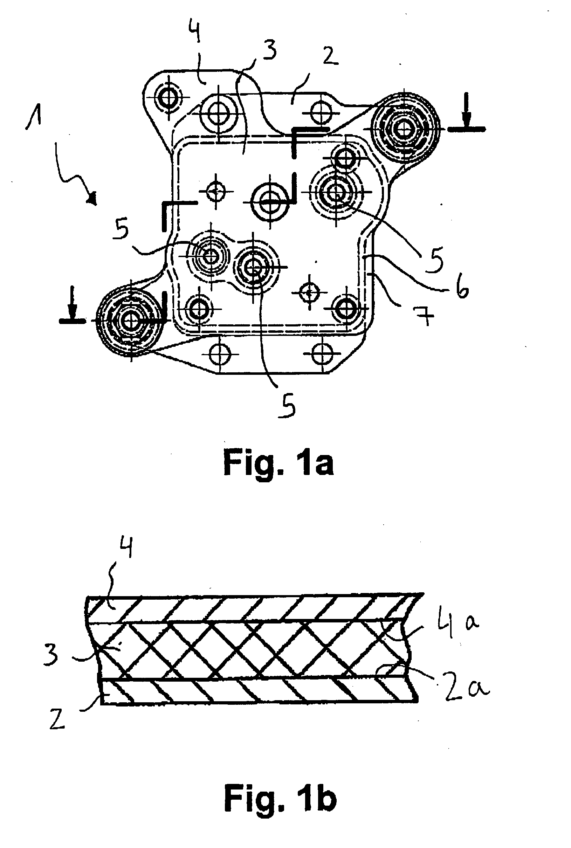

Fig. 1a zeigt eine Draufsicht auf eine Schichtfeder 1, welche dazu dient Massen miteinander zu verbinden deren Masseverhältnis 1:10 betragen kann. Die Schichtfeder 1 besteht im Wesentlichen aus einer Grundplatte 2, einer Elastomerschicht 3 und einer Deckplatte 4. Die Grundplatte 2, die Deckplatte 4 und die Elastomerschicht 3 sind durch einen Vulkanisationsprozess dauerhaft miteinander verbunden.

Die Grundplatte 2 und die Deckplatte 4 sind zueinander parallel angeordnet und unterscheiden sich in ihren jeweiligen Berandungsgeometrien. Die Elastomerschicht 3 bildet mit ihrer gestrichelt dargestellten Berandungskurve eine Fläche, welche weder über die Berandungskurve der Grundplatte 2 noch über die Berandungskurve der Deckplatte 4 hinausragt. Vielmehr ist sie zu diesen lateral beabstandet.

Die Schichtfeder 1 weist konzentrisch um jeweilige Symmetrieachsen angeordnete Durchführungselemente 5 auf, wobei die Symmetrieachsen normal zu den Flächen der Grundplatte 2 und der Deckplatte 4 orientiert sind.

Die Schichtfeder 1 weist Durchführungselemente 5 auf, die ein strömendes flüssiges oder gasförmiges Medium führen können. Diese Durchführungselemente 5 sind für Medien durchlässig. Die Durchführungselemente 5 bieten zugleich Raum für die Durchführung von Leitungen. Dabei ist denkbar, dass die Durchführungselemente 5 Medien und/ oder Leitungen führen.

Fig. 1b zeigt, dass die Elastomerschicht 3 eine relativ geringe erste Dicke aufweist und durch den Vulkanisationsprozess an der Grundplatte 2 und der Deckplatte 4 gebunden anliegt. Die Elastomerschicht 3 ist an sogenannten Bindeflächen 2a, 4a an die Grundplatte 2 und die Deckplatte 4 angebunden. Die erste Dicke bestimmt den Abstand der Grundplatte 2 von der Deckplatte 4.

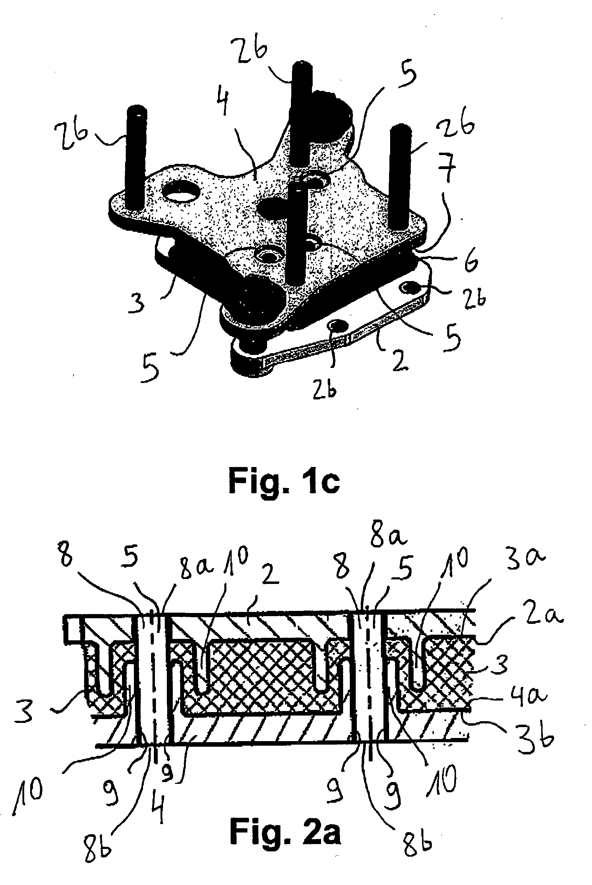

Fig. 1c zeigt eine perspektivische Ansicht der Schichtfeder 1. Die Elastomerschicht 3 weist an einer nichtgebundenen, freien Oberfläche 6 in zwei Entformungsrichtungen einen Hinterschnitt 7 auf. Dieser Hinterschnitt 7 wird durch die Elastomerschicht 3 und die mit der Elastomerschicht 3 verbundene Grundplatte 2 und Deckplatte 4 gebildet.

Fig. 1 c zeigt, dass in der Grundplatte 2 Befestigungsdurchgangsbohrungen 2b vorgesehen sind, welche der Anbindung der Grundplatte 2 und/ oder der Deckplatte 4 an eine zu lagernde Masse dienen.

In der Deckplatte 4 sind stabförmige Schrauben 26 aufgenommen.

Fig. 2a zeigt, dass die Durchführungselemente 5 strukturierte elastomere Hohlzylindervolumina 8 aufweisen, durch welche Medien durchgeleitet bzw. Leitungen geführt werden können. Die strukturierten elastomeren Hohlzylindervolumina 8 können Leitungen zumindest teilweise beabstandet umgeben.

Ein solches strukturiertes elastomeres Hohlzylindervolumen 8 wird von einer Schicht 9 aus einem elastomeren Werkstoff begrenzt, welche konzentrisch zu einer gestrichelt angedeuteten Symmetrieachse angeordnet ist. Das strukturierte elastomere Hohlzylindervolumen 8 bildet einen Hohlzylinder aus, welcher an kreisförmigen Stirnflächen 8a, 8b in den äußeren Deckflächen der Grundplatte 2 bzw. der Deckplatte 4 offen ausgebildet ist, um eine Durchleitung von Medien zu erlauben. Das strukturierte elastomere Hohlzylindervolumen 8 ist konkret als Durchgangsbohrung durch die Schichtfeder 1 ausgestaltet Dieses strukturierte elastomere Hohlzylindervolumen 8 kann in seinem Inneren Leitungen aufnehmen, die zur inneren Wandung der Schicht 9 aus elastomerem Werkstoff beabstandet sind. Diese Leitungen können Medien, elektrische Ströme, elektromagnetische Felder oder auch Licht leiten, so dass ein bidirektionales Durchleiten von Medien, aber auch von elektrischen Strömen, elektromagnetischen Feldern oder Licht möglich ist.

Eine solche Durchgangsbohrung durch die Schichtfeder 1 ist entlang ihrer Längserstreckung komplett mit einer Schicht 9 aus einem elastomeren Werkstoff einer Mindestschichtdicke ausgekleidet. Dieser elastomere Werkstoff ist materialeinheitlich und einstückig mit der die Grundplatte 2 und Deckplatte 4 verbindenden Elastomerschicht 3 verbunden. Die Durchgangsbohrung ist in die Schichtfeder 1 integriert und normal zu der Grundplatte 2 und zu der Deckplatte 4 orientiert.

Fig. 2a zeigt im Schnitt eine Schichtfeder 1 gemäß Fig. 1c zur festen Anbindung an eine Masse, umfassend eine Grundplatte 2 und eine Deckplatte 4, wobei zwischen der Grundplatte 2 und der Deckplatte 4 eine Elastomerschicht 3 angeordnet ist und wobei die Grundplatte 2, die Deckplatte 4 und die Elastomerschicht 3 von Durchführungselementen 5 durchgriffen sind. Die Elastomerschicht 3 weist eine nach außen orientierte freie Oberfläche 6 auf und weist in dem von der freien Oberfläche 6, der Grundplatte 2 und der Deckplatte 4 begrenzten Bereich unterschiedliche Dicken auf.

Die Elastomerschicht 3 wird von Konturzügen 3a, 3b begrenzt, wobei die Konturzüge 3a, 3b Grenzflächen zur Elastomerschicht 3 ausbilden und wobei diese Grenzflächen durch zumindest zwei unterschiedliche Dicken der Elastomerschicht 3 voneinander beabstandet sind.

Die Durchführungselemente 5 umfassen Hohlzylinder 10, welche mit der Grundplatte 2 und/ oder der Deckplatte 4 verbunden sind.
Von der Grundplatte 2 ragt ein erster Hohlzylinder 5 ab und von der Deckplatte 4 ragt ein zweiter Hohlzylinder 10 ab, wobei die Hohlzylinder 10 konzentrisch angeordnet sind, unterschiedliche Durchmesser aufweisen und die Elastomerschicht 3 teilweise zwischen sich aufnehmen.

Die Durchführungselemente 5 weisen strukturierte elastomere Hohlzylindervolumina 8 zur Durchführung von Medien und/ oder Leitungen auf, welche mit einer Schicht 9 aus einem elastomeren Werkstoff ausgekleidet sind.

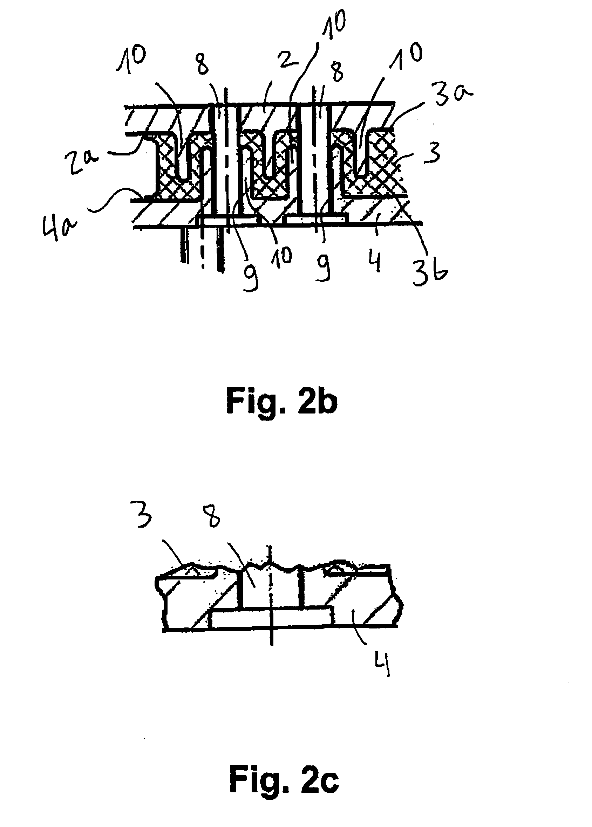

Die Elastomerschicht 3 ist gemäß Fig. 2a oder Fig. 2b in einem Schnitt durch eine der gestrichelten Symmetrieachsen im Wesentlichen mäanderförmig ausgestaltet. Die Mäanderform in der Schnittdarstellung wird durch mindestens zwei konzentrisch um die gestrichelten Symmetrieachsen des strukturierten elastomeren Hohlzylindervolumens 8 angeordnete metallische Hohlzylinder 10 gebildet. Die metallischen Hohlzylinder 10 sind materialeinheitlich und ohne Trennstelle wechselseitig mit der Grundplatte 2 bzw. der Deckplatte 4 verbunden. Durch sie wird die besondere Funktionalität der jeweiligen strukturierten elastomeren Hohlzylindervolumina 8 geprägt.

Die metallischen Hohlzylinder 10 sind voneinander radial beabstandet. Dabei ist der innerste metallische Hohlzylinder 10 so angeordnet, dass dessen Längsachse mit der Längsachse der Durchgangsbohrung durch die Grundplatte 2 und die Deckplatte 4 zusammenfällt. Die Durchgangsbohrung weist in der Grundplatte 2 den gleichen Durchmesser auf wie in der gegenüberliegenden Deckplatte 4.

Das strukturierte elastomere Hohlzylindervolumen 8 ist so ausgestaltet und angeordnet, dass sich eine Mediendruckdifferenz relativ zu den die Schichtfeder 1 umgebenden Druckverhältnissen einstellen kann. Diese Mediendruckdifferenz steht im dynamischen Gleichgewicht mit den die Schichtfeder 1 umgebenden Druckverhältnissen und den Spannungen durch eine lokale Verschiebung der Elastomerschicht 3.

Das strukturierte elastomere Hohlzylindervolumen 8 ist durch Vulkanisation mit der Grundplatte 2 und der Deckplatte 4 verbunden. Die strukturierten elastomeren Hohlzylindervolumina 8 sind innerhalb der Schichtfeder 1 angeordnet. Sie können unterschiedliche Geometrien aufweisen. Dabei ist denkbar, dass die strukturierten elastomeren Hohlzylindervolumina nicht nur runde, sondern auch ovale oder dreieckige Querschnitte aufweisen.

Die strukturierten elastomeren Hohlzylindervolumina 8 sind innerhalb der Schichtfeder 1 angeordnet. Ihre gestrichelt dargestellten Symmetrieachsen weisen innerhalb der Schichtfeder möglicherweise unterschiedliche Abstände zueinander auf. Dabei ergeben sich in einer Draufsicht auf die Schichtfeder 1 regelmäßige oder auch unregelmäßige Muster aus strukturierten elastomeren Hohlzylindervolumina 8.

Auch in Fig. 2b sind die metallischen Hohlzylinder 10 voneinander radial beabstandet Dabei ist der innerste metallische Hohlzylinder 10 so angeordnet, dass dessen Längsachse mit der der Durchgangsbohrung durch die Grundplatte 2 und die Deckplatte 4 zusammenfällt. Die Durchgangsbohrung weist in der Grundplatte 2 einen kleineren Durchmesser auf wie in der gegenüberliegenden Deckplatte 4. Dies ist im Detail in Fig. 2c gezeigt. Die Durchgangsbohrung weist am nach außen orientierten Randbereich der Deckplatte 4 einen größeren Durchmesser auf als im Bereich der Elastomerschicht 3.

Die in Fig. 2a bis Fig. 2c dargestellten Durchführungselemente 5 bilden zusammen mit der Grundplatte 2 und der Deckplatte 4 in einem gedachten Schnitt durch die gestrichelt dargestellten Symmetrieachsen mindestens zwei zueinander beabstandete Konturzüge 3a, 3b aus.

Die Konturzüge 3a, 3b bilden Grenzflächen zur Elastomerschicht 3. Sie bestehen aus kreisförmigen Abschnitten, Bogenelementen und Strecken, zwischen denen materialeinheitlich und einstückig mit der Grundplatte 2 und der Deckplatte 4 verbundene Volumina der Elastomerschicht 3 aufgenommen sind.

Die Schichtfeder 1 ist um die Durchführungselemente 5 herum gestaltet. Die Durchführungselemente 5 bilden Dichtflächen, die in der Ebene nach außen orientierten Grenzflächen der Grundplatte 2 und/ oder der Deckplatte 4 liegen. Die Dichtflächen können auch in das Innere der Grundplatte 2 und/ oder der Deckplatte 4 hinein versetzt angeordnet sein.

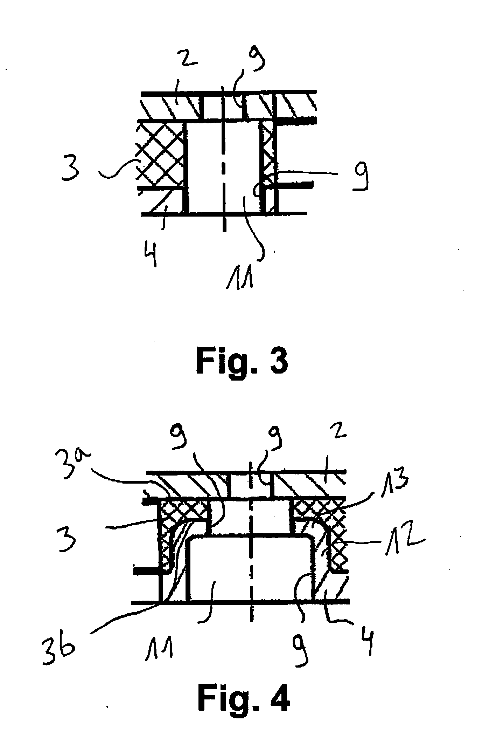

Fig. 3 zeigt dass die Durchführungselemente 5 auch strukturierte Hohlzylindervolumina 11 zur Aufnahme von Abreissicherungen umfassen, welche mit einer Schicht 9 aus einem elastomeren Werkstoff ausgekleidet sind. Die Durchführungselemente 5 weisen hier abgestufte Durchgangsbohrungen mit unterschiedlichen Durchmessern auf.

Fig. 3 zeigt ein strukturiertes Hohlzylindervolumen 11, welches eine Abreissicherung ausbilden soll. Es ist als Durchgangsbohrung durch die Schichtfeder 1 mit gestuftem Durchmesser ausgestaltet. Die konzentrisch zur gestrichelt dargestellten Symmetrieachse angeordnete Durchgangsbohrung durch die einander gegenüberliegende Grundplatte 2 und Deckplatte 4 weist in der Regel verschiedene Durchmesser auf.

Die Durchgangsbohrung durch die Schichtfeder 1 ist im Wesentlichen so gestaltet, dass zumindest eine innenliegende Zylinderwandung der Durchgangsbohrung durch die Grundplatte 2 und/ oder die Deckplatte 4 mit einer Schicht 9 aus einem elastomeren Werkstoff einer Mindestschichtdicke beaufschlagt ist. Der elastomere Werkstoff ist mit dem restlichen Volumen der die Grundplatte 2 und Deckplatte 4 verbindenden Elastomerschicht 3 materialeinheitlich und einstückig nach der Vulkanisation der Schichtfeder 1 verbunden.

Ein nicht gezeigtes Anschlagelement kann im strukturierten Hohlzylindervolumen 11 angeordnet werden, um die Grundplatte 2 bzw. Deckplatte 4 gegen eine Relativbewegung zu sichern. Die Relativbewegung kann ein Abreissen der Grundplatte 2 bzw. Deckplatte 4 aus ihrer Verbindung mit einer Masse bewirken. Dabei ist entweder die Grundplatte 2 oder die Deckplatte 4 an der Masse befestigt.

Die gestrichelt dargestellte Symmetrieachse des strukturierten Hohlzylindervolumens 11 ist bevorzugt in der Nähe eines Schwerpunkts einer gedachten Fläche angeordnet. Diese gedachte Fläche liegt in einer Schnittebene durch die Elastomerschicht 3, in welcher die größte gedachte Fläche entsteht.

Fig. 4 zeigt ein strukturiertes Hohlzylindervolumen 11, welches im Wesentlichen eine Abreissicherung ausbilden soll. Dieses strukturierte Hohlzylindervolumen 11 ist eine Alternative zum Ausführungsbeispiel gemäß Fig. 3. Es ist im Wesentlichen als Durchgangsbohrung durch die Schichtfeder 1 mit gestuftem Durchmesser ausgestaltet. Die Durchgangsbohrungen durch die einander gegenüberliegenden Grundplatte 2 und Deckplatte 4 weisen verschiedene Durchmesser auf.

Das strukturierte Hohlzylindervolumen 11 ist als gestufte Durchgangsbohrung ausgestaltet, wobei die Deckplatte 4 um die gestrichelt dargestellte Symmetrieachse herum als Napf 12 ausgeführt ist. Der Napf 12 ist mit seinem Boden 13 der gegenüberliegenden Grundplatte 2 zugewandt und weist ebenfalls eine Durchgangsbohrung auf.

Die Durchgangsbohrung durch die Schichtfeder 1 ist im Wesentlichen so ausgestaltet, dass zumindest eine innenliegende Zylinderwandung der Durchgangsbohrung durch die Grundplatte 2 und/ oder die Deckplatte 4 mit einer Schicht 9 aus einem elastomeren Werkstoff einer Mindestschichtdicke beaufschlagt ist. Der elastomere Werkstoff ist mit dem restlichen Volumen der Elastomerschicht 3 und der Grundplatte 2 bzw. der Deckplatte 4 materialeinheitlich und einstückig nach der Vulkanisation der Schichtfeder 1 verbunden.

Ein nicht gezeigtes Anschlagelement kann in dem strukturierten Hohlzylindervolumen 11 gemäß Fig. 4 angeordnet werden, um die gesamte Schichtfeder 1 gegen eine Relativbewegung zu sichern. Die Relativbewegung kann ein Abreissen der Schichtfeder 1 aus der Verbindung entweder der Grundplatte 2 oder der Deckplatte 4 mit einer Masse bewirken, wobei die Masse entweder an der Grundplatte 2 oder an der Deckplatte 4 befestigt ist Dabei liegt die Grundplatte 2 dem Boden 13 des Napfes 12 gegenüber und ist nicht mit dem Napf 12 materialeinheitlich verbunden.

Die gestrichelt dargestellte Symmetrieachse des strukturierten Hohlzylindervolumens 11 gemäß Fig. 4 ist bevorzugt in der Nähe eines Schwerpunkts einer gedachten Fläche angeordnet. Diese gedachte Fläche liegt in einer Schnittebene durch die Elastomerschicht 3, in welcher die größte gedachte Fläche entsteht.

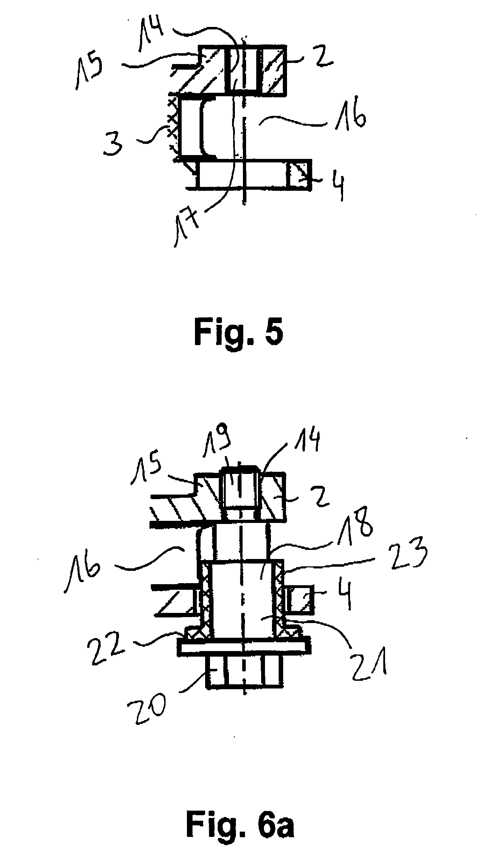

Fig. 5 zeigt Durchgangsbohrungen durch die Grundplatte 2 und die Deckplatte 4, welche im Wesentlichen der Aufnahme eines nicht gezeigten Anschlagelements dienen.

Sie sind als zueinander konzentrische Durchgangsbohrungen durch die Grundplatte 2 und die Deckplatte 4 ausgestaltet, wobei die Durchgangsbohrungen unterschiedliche Durchmesser aufweisen und eine der Durchgangsbohrungen ein Durchgangsgewinde 14 aufweist.

Die Grundplatte 2, die mit der Durchgangsbohrung mit Durchgangsgewinde 14 versehen ist, ist auf einer nach außen orientierten Grenzfläche lokal verstärkt. Die Verstärkung ist derart ausgebildet, dass eine zu dieser Grenzfläche parallele Kreisringfläche 15 entsteht. Die Kreisringfläche 15 stellt eine Anlagefläche für die Schichtfeder 1 an eine Masse dar und ist zur sonstigen Grenzfläche beabstandet bzw, zu dieser erhaben ausgestaltet

Zwischen der Grundplatte 2 und der Deckplatte 4 ist im Bereich der Durchgangsbohrungen ein materialfreies Teilvolumen 16 der Schichtfeder 1 ausgebildet.

Die gestrichelt dargestellte Symmetrieachse des strukturierten Zylindervolumens 17 ist bevorzugt in der Nähe eines Schwerpunkts einer gedachten Fläche angeordnet. Diese gedachte Fläche liegt in einer Schnittebene durch die Elastomerschicht 3, in welcher die größte gedachte Fläche entsteht.

Fig. 6a zeigt, dass in der Grundplatte 2 und/ oder der Deckplatte 4 Durchgangsbohrungen vorgesehen sind, in denen ein Anschlagelement 18 aufgenommen ist.

Das Anschlagelement 18 ist als Schraube ausgebildet, welche zumindest teilweise mit einer Elastomerbeschichtung 23 versehen ist.

Fig. 6a zeigt ein strukturiertes Zylindervolumen 17, in dem ein Anschlagelement 18 aufgenommen ist. Dieses dient im Wesentlichen der gedämpften impulsartigen Begrenzung einer zweiten Relativbewegung der Grundplatte 2 und Deckplatte 4 nach einer definierten ersten Relativbewegung.

Das Anschlagelement 18 ist als mehrfach in zylindrische Abschnitte unterteilte Schraube mit unterschiedlichen Durchmessern und einem Sechseck-Schraubenkopf 20 ausgebildet. Dabei ist dem Sechseck-Schraubenkopf 20 gegenüberliegend am anderen Ende der Schraube ein Gewindebolzen 19 angeordnet. Die Durchmesser der Schraube nehmen vom Gewindebolzen 19 ausgehend in Richtung des Sechseck-Schraubenkopfs 20 hin zu.

Ein zylindrischer Hauptabschnitt 21 der Schraube grenzt direkt an einen Bund 22 an. Der zylindrische Hauptabschnitt 21 und eine zylindrische Stirnfläche des Bundes 22, welche dem Gewindebolzen 19 zugewandt ist, sind mit einer Elastomerbeschichtung 23 einer Mindestschichtdicke versehen. Die Schraube und die Elastomerbeschichtung 23 sind festhaftend miteinander verbunden.

Die Elastomerbeschichtung 23 stützt bei Kontakt mit der Deckplatte 4 ab. Hierdurch wird eine Dämpfungsfunktion für die weitere Annäherung zwischen der Grundplatte 2, der Deckplatte 4 und der Schraube realisiert.

Das Anschlagelement 18 ist mit seinem Gewindebolzen 19 in die Grundplatte 2 geschraubt, welche auf der nach außen orientierten Grenzfläche lokal verstärkt ist.

Die gestrichelt dargestellte Symmetrieachse des strukturierten Zylindervolumens 17 ist bevorzugt in der Nähe eines Schwerpunkts einer gedachten Fläche angeordnet. Diese gedachte Fläche liegt in einer Schnittebene durch die Elastomerschicht 3, in welcher die größte gedachte Fläche entsteht.

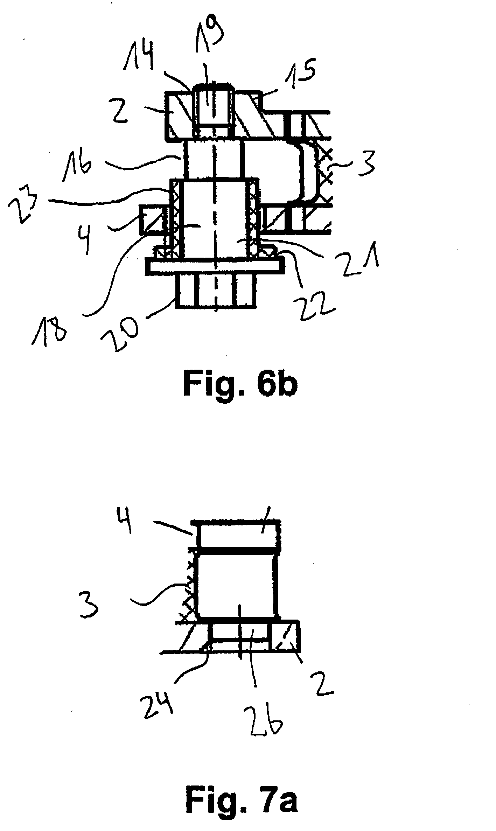

Fig. 6b zeigt ein weiteres Anschlagelement 18, welches an einer anderen Stelle der Schichtfeder 1 angeordnet ist.

Fig. 7a zeigt Befestigungsdurchgangsbohrungen 2b durch die Grundplatte 2 und die Deckplatte 4, welche im Wesentlichen der Befestigung der Schichtfeder an einer schwingungstechnisch zu lagernden Masse dienen. Sie sind als Durchgangsbohrungen durch die Grundplatte 2 und die Deckplatte 4 gestaltet, welche normal zu der lateralen Erstreckung der Elastomerschicht 3 orientiert sind.

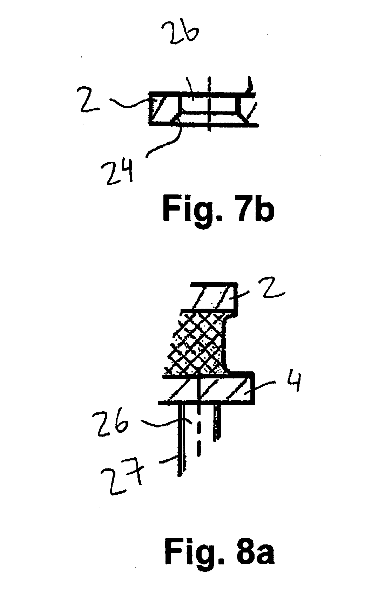

Fig. 7b zeigt konkret, dass eine Befestigungsdurchgangsbohrung 2b um die gestrichelt dargestellte Symmetrieachse herum auf einer nach außen orientierten Grenzfläche mit einer innenfase 24 versehen ist.

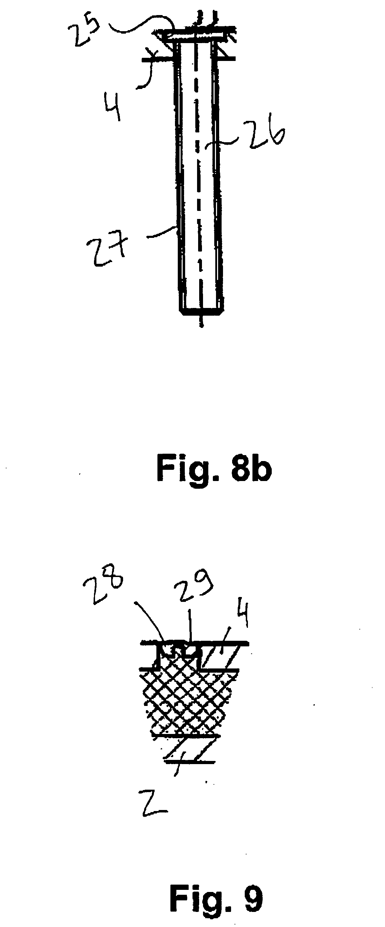

Fig. 8a und Fig. 8b zeigen eine Durchgangsbohrung durch die Deckplatte 4, welche im Wesentlichen der Befestigung einer schwingungstechnisch zu lagernden Masse dient bzw. der Befestigung an eine Masse dient. Sie ist als Durchgangsbohrung durch die Deckplatte 4 ausgestattet, welche normal zur lateralen Ersteckung der Elastomerschicht 3 orientiert sind.

Die Durchgangsbohrung weist auf der der Elastomerschicht 3 zugewandten Seite eine zylindrische Senkung 25 auf, welche der kraft- und / oder formschlüssigen Aufnahme einer stabförmigen Schraube 26 dient. Die stabförmige Schraube 26 ragt mit ihrem Gewinde 27 im Wesentlichen aus der Schichtfeder 1 heraus. Die gezeigte Durchgangsbohrung ist mit einer stabförmigen Schraube 26 ausgefüllt.

Einige der gestrichelt dargestellten Symmetrieachsen der stabförmigen Schrauben 26 durchstoßen die Elastomerschicht 3 virtuell, wobei mindestens eine der Symmetrieachsen die Elastomerschicht 3 nicht durchbricht. Dies ist konkret in Fig. 1c dargesteilt.

Fig. 9 zeigt, dass in der Grundplatte (2) und/ oder der Deckplatte (4) eine Einspritzbohrung (28) zum Einspritzen der Elastomerschicht (3) vorgesehen ist.

Fig. 9 zeigt eine Durchgangsbohrung durch die Deckplatte 4, welche als Einspritzbohrung 28 ausgestaltet ist. Sie ist als im Wesentlichen zylindrische Bohrung ausgestaltet, welche nach dem Vulkanisationsprozeß zumindest teilweise mit einem Anspritznippel 29 aus Elastomer gefüllt ist

Hinsichtlich weiterer vorteilhafter Ausgestaltungen und Weiterbildungen der erfindungsgemäßen Lehre wird einerseits auf den allgemeinen Teil der Beschreibung und andererseits auf die beigefügten Patentansprüche verwiesen.

## Patentansprüche

1. Schichtfeder (1) zur festen Anbindung an eine Masse, umfassend eine Grundplatte (2) und eine Deckplatte (4), wobei zwischen der Grundplatte (2) und der Deckplatte (4) eine Elastomerschicht (3) angeordnet ist und wobei die Grundplatte (2), die Deckplatte (4) und die Elastomerschicht (3) von Durchführungselementen (5) durchgriffen sind, wobei die Elastomerschicht (3) eine nach außen orientierte freie Oberfläche (6) aufweist und in dem von der freien Oberfläche (6), der Grundplatte (2) und der Deckplatte (4) begrenzten Bereich unterschiedliche Dicken aufweist, wobei die Elastomerschicht (3) aufgrund ihrer variierenden Dicke mäanderförmig ausgestaltet ist, **dadurch gekennzeichnet, dass** die Durchführungselemente (5) Hohlzylinder (10) umfassen, welche mit der Grundplatte (2) und/ oder der Deckplatte (4) verbunden sind und dass von der Grundplatte (2) ein erster Hohlzylinder (5) abragt und von der Deckplatte (4) ein zweiter Hohlzylinder (10) abragt, wobei die Hohlzylinder (10) konzentrisch angeordnet sind, unterschiedliche Durchmesser aufweisen und die Elastomerschicht (3) teilweise zwischen sich aufnehmen.

2. Schichtfeder nach Anspruch 1, **dadurch gekennzeichnet, dass** die Elastomerschicht (3) von Konturzügen (3a, 3b) begrenzt wird, wobei die Konturzüge (3a, 3b) Grenzflächen zur Elastomerschicht (3) ausbilden und wobei diese Grenzflächen durch zumindest zwei unterschiedliche Dicken der Elastomerschicht (3) voneinander beabstandet sind.

3. Schichtfeder nach Anspruch 1 oder 2, **dadurch gekennzeichnet, dass** die Durchführungselemente (5) strukturierte elastomere Hohlzylindervolumina (8) zur Durchführung von Medien und/ oder Leitungen aufweisen, welche mit einer Schicht (9) aus einem elastomeren Werkstoff ausgekleidet sind.

4. Schichtfeder nach einem der Ansprüche 1 bis 3, **dadurch gekennzeichnet, dass** die Durchführungselemente (5) strukturierte Hohlzylindervolumina (11) zur Aufnahme von Abreissicherungen aufweisen, welche mit einer Schicht (9) aus einem elastomeren Werkstoff ausgekleidet sind.

5. Schichtfeder nach einem der Ansprüche 1 bis 4, **dadurch gekennzeichnet, dass** die Durchführungselemente (5) abgestufte Durchgangsbohrungen mit unterschiedlichen Durchmessern aufweisen.

6. Schichtfeder nach einem der Ansprüche 1 bis 5, **dadurch gekennzeichnet, dass** in der Grundplatte (2) und/ oder der Deckplatte (4) Durchgangsbohrungen vorgesehen sind, in denen ein Anschlagelement (18) aufgenommen ist.

7. Schichtfeder nach Anspruch 6, **dadurch gekennzeichnet, dass** das Anschlagelement (18) als Schraube ausgebildet ist, welche zumindest teilweise mit einer Elastomerbeschichtung (23) versehen ist.

8. Schichtfeder nach einem der Ansprüche 1 bis 7, **dadurch gekennzeichnet, dass** in der Grundplatte (2) und/ oder der Deckplatte (4) Befestigungsdurchgangsbohrungen (2b) vorgesehen sind, welche der Anbindung der Grundplatte (2) und/ oder der Deckplatte (4) an eine zu lagernde Masse dienen.

9. Schichtfeder nach einem der Ansprüche 1 bis 8, **dadurch gekennzeichnet, dass** in der Grundplatte (2) und/ oder der Deckplatte (4) stabförmige Schrauben (26) aufgenommen sind.

10. Schichtfeder nach einem der Ansprüche 1 bis 9, **dadurch gekennzeichnet, dass** in der Grundplatte (2) und/ oder der Deckplatte (4) eine Einspritzbohrung (28) zum Einspritzen der Elastomerschicht (3) vorgesehen ist.

11. Schichtfeder nach einem der Ansprüche 1 bis 10, **dadurch gekennzeichnet, dass** die Durchführungselemente (5) mit einem Elastomer ausgekleidet sind, welches sich von dem Elastomer der Elastomerschicht (3) unterscheidet.

12. Schichtfeder nach einem der Ansprüche 1 bis 11, **dadurch gekennzeichnet, dass** die Durchführungselemente (5) mit einem Material beschichtet sind, welches nicht als Elastomer ausgestaltet ist.

13. Schichtfeder nach einem der Ansprüche 1 bis 12, **dadurch gekennzeichnet, dass** die Durchführungselemente (5) mit einem Material beschichtet sind, welches antibakterielle Eigenschaften zeigt.

## Claims

1. Multilayered spring (1) for fixed attachment to a mass, comprising a baseplate (2) and a cover plate (4), wherein an elastomer layer (3) is arranged between the baseplate (2) and the cover plate (4) and wherein the baseplate (2), the cover plate (4) and the elastomer layer (3) are traversed by feed-through elements (5), wherein the elastomer layer (3) has an outwardly oriented free surface (6) and has different thicknesses in the region bounded by the free surface (6), the baseplate (2) and the cover plate (4), wherein the elastomer layer (3), on account of its varying thickness, is configured in meandering form, **characterized in that** the feed-through elements (5) comprise hollow cylinders (10) which are connected to the baseplate (2) and/or to the cover plate (4), and **in that** a first hollow cylinder (5) projects from the baseplate (2) and a second hollow cylinder (10) projects from the cover plate (4), wherein the hollow cylinders (10) are arranged concentrically, have different diameters and partially accommodate the elastomer layer (3) between them.

2. Multilayered spring according to Claim 1, **characterized in that** the elastomer layer (3) is bounded by contour paths (3a, 3b), wherein the contour paths (3a, 3b) form interfaces to the elastomer layer (3) and wherein these interfaces are spaced apart by at least two different thicknesses of the elastomer layer (3).

3. Multilayered spring according to Claim 1 or 2, **characterized in that** the feed-through elements (5) have structured elastomeric hollow cylinder volumes (8) for feeding through media and/or lines which are lined with a layer (9) of an elastomeric material.

4. Multilayered spring according to one of Claims 1 to 3, **characterized in that** the feed-through elements (5) have structured hollow cylinder volumes (11) for accommodating tear-off preventers which are lined with a layer (9) of an elastomeric material.

5. Multilayered spring according to one of Claims 1 to 4, **characterized in that** the feed-through elements (5) have stepped through-holes with different diameters.

6. Multilayered spring according to one of Claims 1 to 5, **characterized in that** through-holes in which a stop element (18) is accommodated are provided in the base plate (2) and/or the cover plate (4).

7. Multilayered spring according to Claim 6, **characterized in that** the stop element (18) is designed as a screw which is provided at least partially with an elastomeric coating (23).

8. Multilayered spring according to one of Claims 1 to 7, **characterized in that** fastening through-holes (2b) which serve to attach the baseplate (2) and/or the cover plate (4) to a mass to be mounted are provided in the baseplate (2) and/or the cover plate (4).

9. Multilayered spring according to one of Claims 1 to 8, **characterized in that** bar-shaped screws (26) are accommodated in the baseplate (2) and/or the cover plate (4).

10. Multilayered spring according to one of Claims 1 to 9, **characterized in that** an injection hole (28) for injecting the elastomer layer (3) is provided in the baseplate (2) and/or the cover plate (4).

11. Multilayered spring according to one of Claims 1 to 10, **characterized in that** the feed-through elements (5) are lined with an elastomer which differs from the elastomer of the elastomer layer (3).

12. Multilayered spring according to one of Claims 1 to 11, **characterized in that** the feed-through elements (5) are coated with a material which is not configured as an elastomer.

13. Multilayered spring according to one of Claims 1 to 12, **characterized in that** the feed-through elements (5) are coated with a material which shows antibacterial properties.

## Revendications

1. Ressort multicouche (1) pour la liaison fixe à une masse, comprenant une plaque de base (2) et une plaque de couverture (4), une couche élastomère (3) étant disposée entre la plaque de base (2) et la plaque de couverture (4), et la plaque de base, (2), la plaque de couverture (4) et la couche élastomère (3) étant traversées par des éléments de passage (5), la couche élastomère (3) présentant une surface libre orientée vers l'extérieur (6) et présentant différentes épaisseurs dans la région délimitée par la surface libre (6), la plaque de base (2) et la plaque de couverture (4), et la couche élastomère (3), du fait de son épaisseur variable, étant configurée sous forme sinueuse, **caractérisé en ce que** les éléments de passage (5) comprennent des cylindres creux (10) qui sont connectés à la plaque de base (2) et/ou à la plaque de couverture (4) et **en ce qu'**un premier cylindre creux (5) fait saillie depuis la plaque de base (2) et un deuxième cylindre creux (10) fait saillie depuis la plaque de couverture (4), les cylindres creux (10) étant disposés concentriquement, présentant des diamètres différents et recevant entre eux en partie la couche élastomère (3).

2. Ressort multicouche selon la revendication 1, **caractérisé en ce que** la couche élastomère (3) est limitée par des tracés de contour (3a, 3b), les tracés de contour (3a, 3b) constituant des surfaces limites de la couche élastomère (3) et ces surfaces limites étant espacées l'une de l'autre par au moins deux épaisseurs différentes de la couche élastomère (3).

3. Ressort multicouche selon la revendication 1 ou 2, **caractérisé en ce que** les éléments de passage (5) présentent des volumes cylindriques creux élastomères structurés (8) pour le passage de fluides et/ou de conduites, qui sont revêtus d'une couche (9) en un matériau élastomère.

4. Ressort multicouche selon l'une quelconque des revendications 1 à 3, **caractérisé en ce que** les éléments de passage (5) présentent des volumes cylindriques creux structurés (11) pour recevoir des protections contre l'arrachement, lesquels sont revêtus d'une couche (9) en un matériau élastomère.

5. Ressort multicouche selon l'une quelconque des revendications 1 à 4, **caractérisé en ce que** les éléments de passage (5) présentent des perçages traversants étagés avec des diamètres différents.

6. Ressort multicouche selon l'une quelconque des revendications 1 à 5, **caractérisé en ce que** des perçages traversants sont prévus dans la plaque de base (2) et/ou la plaque de couverture (4), dans lesquels est reçu un élément de butée (18).

7. Ressort multicouche selon la revendication 6, **caractérisé en ce que** l'élément de butée (18) est réalisé sous forme de vis qui est munie au moins en partie d'un revêtement élastomère (23).

8. Ressort multicouche selon l'une quelconque des revendications 1 à 7, **caractérisé en ce que** dans la plaque de base (2) et/ou la plaque de couverture (4) sont prévus des perçages traversants de fixation (2b) qui servent à relier la plaque de base (2) et/ou la plaque de couverture (4) à une masse à supporter.

9. Ressort multicouche selon l'une quelconque des revendications 1 à 8, **caractérisé en ce que** dans la plaque de base (2) et/ou la plaque de couverture (4) sont reçues des vis en forme de tiges (26).

10. Ressort multicouche selon l'une quelconque des revendications 1 à 9, **caractérisé en ce que** dans la plaque de base (2) et/ou la plaque de couverture (4) est prévu un perçage d'injection (28) pour injecter la couche élastomère (3).

11. Ressort multicouche selon l'une quelconque des revendications 1 à 10, **caractérisé en ce que** les éléments de passage (5) sont revêtus d'un élastomère qui est différent de l'élastomère de la couche élastomère (3).

12. Ressort multicouche selon l'une quelconque des revendications 1 à 11, **caractérisé en ce que** les éléments de passage (5) sont revêtus d'un matériau qui n'est pas configuré sous forme d'élastomère.

13. Ressort multicouche selon l'une quelconque des revendications 1 à 12, **caractérisé en ce que** les éléments de passage (5) sont revêtus d'un matériau qui présente des propriétés antibactériennes.
